(19) Europäisches Patentamt
European Patent Office
Office européen des brevets

(11) EP 3 716 515 A1

(12) EUROPEAN PATENT APPLICATION

(43) Date of publication:
30.09.2020 Bulletin 2020/40

(51) Int Cl.:
$H04L\ 1/18$ (2006.01)

(21) Application number: 20164357.4

(22) Date of filing: 19.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.03.2019 US 201962825493 P

(71) Applicant: TCL Communication Limited
Kowloon, Hong Kong (CN)

(72) Inventors:
• Cohen, Ronen
92700 Colombes (FR)
• Assouline, Benny
92700 Colombes (FR)
• Cayron, Noam
92700 Colombes (FR)
• Liu, Guang
92700 Colombes (FR)
• Marco, Olivier
92700 Colombes (FR)

(74) Representative: Simmons & Simmons
City Point
One Ropemaker Street
London EC2Y 9SS (GB)

(54) SCHEDULING MULTIPLE TRANSFER BLOCKS

(57) There is provided a method of building a Hybrid automatic repeat request (HARQ) process set. The method comprises adding each new sequence of HARQ processes to a group of all the HARQ process sequences, and iterating the adding step $J_i$ times for each possible number of Transport Blocks to be transmitted. Each HARQ process sequence may be correlated to a bit sequence which may transmitted in a DCI message to request re-transmission of certain TBs corresponding to the sequence numbers.

FIG. 3

**Description**

**Technical Field**

The following disclosure relates to scheduling multiple transfer blocks, and in particular, but not exclusively to scheduling multiple transfer blocks for enhanced Machine-Type Communication devices.

**Background**

Wireless communication systems, such as the third-generation (3G) of mobile telephone standards and technology are well known. Such 3G standards and technology have been developed by the Third Generation Partnership Project (3GPP). The 3rd generation of wireless communications has generally been developed to support macro-cell mobile phone communications. Communication systems and networks have developed towards a broadband and mobile system.

In cellular wireless communication systems User Equipment (UE) is connected by a wireless link to a Radio Access Network (RAN). The RAN comprises a set of base stations which provide wireless links to the UEs located in cells covered by the base station, and an interface to a Core Network (CN) which provides overall network control. As will be appreciated the RAN and CN each conduct respective functions in relation to the overall network. For convenience the term cellular network will be used to refer to the combined RAN & CN, and it will be understood that the term is used to refer to the respective system for performing the disclosed function.

The 3rd Generation Partnership Project has developed the so-called Long Term Evolution (LTE) system, namely, an Evolved Universal Mobile Telecommunication System Territorial Radio Access Network, (E-UTRAN), for a mobile access network where one or more macro-cells are supported by a base station known as an eNodeB or eNB (evolved NodeB). More recently, LTE is evolving further towards the so-called 5G or NR (new radio) systems where one or more cells are supported by a base station known as a gNB. NR is proposed to utilise an Orthogonal Frequency Division Multiplexed (OFDM) physical transmission format.

The NR protocols are intended to offer options for operating in unlicensed radio bands, to be known as NR-U. When operating in an unlicensed radio band the gNB and UE must compete with other devices for physical medium/resource access. For example, Wi-Fi, NR-U, and LAA may utilise the same physical resources.

A trend in wireless communications is towards the provision of lower latency and higher reliability services. For example, NR is intended to support Ultra-reliable and low-latency communications (URLLC) and massive Machine-Type Communications (mMTC) are intended to provide low latency and high reliability for small packet sizes (typically 32 bytes). A user-plane latency of 1ms has been proposed with a reliability of 99.99999%, and at the physical layer a packet loss rate of $10^{-5}$ or $10^{-6}$ has been proposed.

mMTC services are intended to support a large number of devices over a long life-time with highly energy efficient communication channels, where transmission of data to and from each device occurs sporadically and infrequently. For example, a cell may be expected to support many thousands of devices.

The disclosure below relates to various improvements to cellular wireless communications systems.

**Summary**

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided a method of building a set of Hybrid Automatic Repeat reQuest (HARQ) process IDs for use in the transmission of TBs in a cellular wireless communication system when scheduling of multiple TBs is enabled, the method comprising the steps of for each number of TBs that may be scheduled by a DCI, defining at least one sequence of HARQ Process IDs, where each sequence of HARQ Process IDs is mapped to a bit sequence, wherein the HARQ Process IDs within each sequence increase; transmitting a DCI message from a base station to a UE to schedule transmission of at least one TB, wherein the DCI message includes one of the bit sequences corresponding to a sequence of HARQ Process IDs defined for the number of TBs being transmitted; and transmitting the number of TBs scheduled in the DCI using the sequence of HARQ Process IDs indicated by the transmitted bit sequence, wherein the size of the bit sequence is equal or greater than the number of scheduled TBs.

The number of TBs that may be scheduled may be restricted.

There is also provided a method of building a Hybrid automatic repeat request (HARQ) process set. The method comprises adding each new sequence of HARQ processes to a group of all the HARQ process sequences, and iterating the adding step $J_i$ times for each possible number of Transport Blocks to be transmitted. Each HARQ process sequence may be correlated to a bit sequence which may transmitted in a DCI message to request re-transmission of certain TBs corresponding to the sequence numbers.

The disclosed methods enable an eMTC network with increased scheduling flexibility when in need of retransmission, and transmission of different HARQ processes using a DCI.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory.

**Brief description of the drawings**

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding.

Figure 1 shows selected elements of a cellular wireless communication network;

Figure 2 shows a schematic of scheduling of multiple transfer blocks using a single MPDCCH transmission;

Figure 3 shows a flowchart of a a method of building a HARQ process set for transmission;

Figure 4 shows a flowchart of a method of generating a HARQ process sequence;

Figure 5 shows a schematic of an eight Transport Block transmission with some successful and some failed transmissions; and

Figure 6 shows a schematic of a time domain for transmission of a plurality of Transport Blocks.

**Detailed description of the preferred embodiments**

Those skilled in the art will recognise and appreciate that the specifics of the examples described are merely illustrative of some embodiments and that the teachings set forth herein are applicable in a variety of alternative settings.

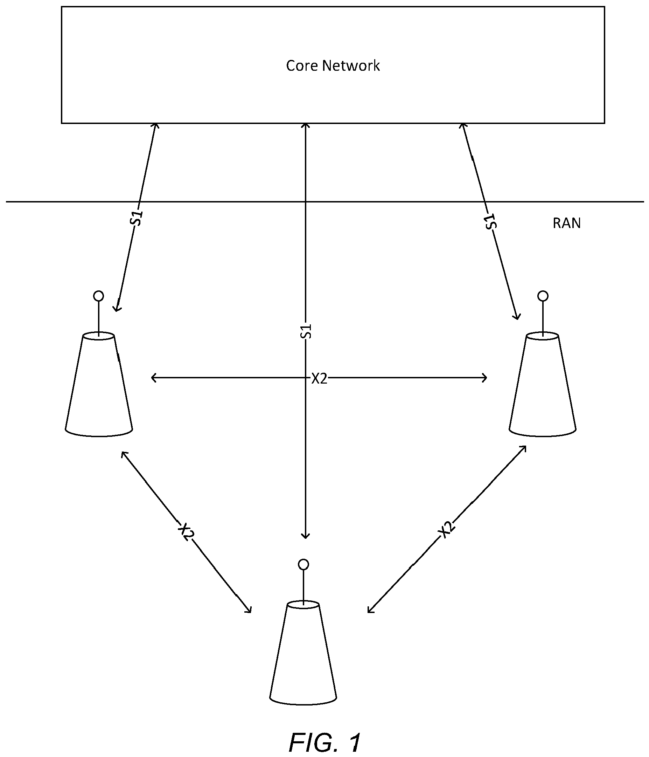

Figure 1 shows a schematic diagram of three base stations (for example, eNB or gNBs depending on the particular cellular standard and terminology) forming a cellular network. Typically, each of the base stations will be deployed by one cellular network operator to provide geographic coverage for UEs in the area. The base stations form a Radio Area Network (RAN). Each base station provides wireless coverage for UEs in its area or cell. The base stations are interconnected via the X2 interface and are connected to the core network via the S1 interface. As will be appreciated only basic details are shown for the purposes of exemplifying the key features of a cellular network. The interface and component names mentioned in relation to Figure 1 are used for example only and different systems, operating to the same principles, may use different nomenclature.

The base stations each comprise hardware and software to implement the RAN's functionality, including communications with the core network and other base stations, carriage of control and data signals between the core network and UEs, and maintaining wireless communications with UEs associated with each base station. The core network comprises hardware and software to implement the network functionality, such as overall network management and control, and routing of calls and data.

eMTC (enhanced Machine-Type Communication) is a 3GPP technology designed for machine to machine communication. eMTC includes several changes to LTE for machine to machine communication use cases. An example use case is extended coverage, in which to compensate for low signal-to-noise ratio (SNR) corresponding to a maximum coupling loss (MCL) 162dB, eMTC enables repetitions for a transmission.

DCI (Downlink Control Information) messages are utilised by the network to control uplink and downlink transmissions for a UE. For eMTC there are five types of DCI messages: 6-0A, 6-0B, 6-1A, 6-1B, and 6-2. Types 6-0A, and 6-0B are used to allow an uplink (UL) transmission or as feedback for previous UL transmission, ie acknowledgement (ACK) or negative-acknowledgement (NACK). Type 6-0B specifics may be viewed in Table 1. Types 6-1A and 6-1B are used to schedule transmission in the physical downlink shared channel (PDSCH). Type 6-1B specifics may be viewed in Table 2. Type 6-2 is used for paging transmission. Type 6-1A specifics may be viewed in Table 3.

**Table 1** - DCI type 6-0B specifics

| Field | #bits | Indication |
|---|---|---|
| Flag format 6-0B/6-1 B | 1 | '0' - 6-0B, '1' - 6-1B |
| Flag sub-PRB resource allocation | 1 | '0' - not enabled, '1' - sub-PRB resource allocation enabled |
| Resource block assignment incase sub-PRB allocation | $\left\lceil \log_2 \left\lfloor \dfrac{N_{RB}^{UL}}{6} \right\rfloor \right\rceil + 4$ | $\left\lceil \log_2 \left\lfloor \dfrac{N_{RB}^{UL}}{6} \right\rfloor \right\rceil$ is the narrowband index 4 bits resource allocation within the narrowband. |
| Resource block assignment incase PRB allocation | $\left\lceil \log_2 \left\lfloor \dfrac{N_{RB}^{UL}}{6} \right\rfloor \right\rceil + 3$ | $\left\lceil \log_2 \left\lfloor \dfrac{N_{RB}^{UL}}{6} \right\rfloor \right\rceil$ is the narrowband index 3 bits resource allocation within the narrowband. |
| Number of resource units | 1 | This field is present when the flag for sub-PRB resource allocation is present and is reserved when the flag for sub-PRB resource allocation is set to 0. |
| Modulation and coding scheme | 3/4 | 3 for sub-PRB allocation, 4 otherwise. |
| Repetition number | 3 | The 3-bit field applies when ce-pdsch-puschEnhancement-config is configured by higher layers, otherwise the 2-bit field applies. |
| HARQ process number | 1 | |
| New data indicator | 1 | |
| DCI subframe repetition number | 2 | |

**Table 2** - DCI type 6-1B specifics

| Field | #bits | Indication |
|---|---|---|
| Flag format 6-0B/6-1 B | 1 | '0' - 6-0B, '1' - 6-1B |
| Reserved bits | $\left\lceil \log_2 \left\lfloor \dfrac{N_{RB}^{DL}}{6} \right\rfloor \right\rceil + 2$ | All bits set to 1 |
| Preamble Index | 6 | |
| PRACH Mask Index | 4 | |
| Starting CE level | 2 | Provide the PRACH starting CE level. |
| Modulation and coding scheme | 4 | |
| **Resource block assignment in case bandwidth is 5MHz** | | |
| Resource block assignment incase $N_{RB}^{DL} > 25$ | $\left\lceil \log_2 \left\lfloor \dfrac{N_{RB}^{DL}}{24} \right\rfloor \right\rceil + 4$ | $\left\lceil \log_2 \left\lfloor \dfrac{N_{RB}^{DL}}{24} \right\rfloor \right\rceil$ MSB provide the wideband index 4 bits provide narrowband bitmap within the wideband |
| Resource block assignment otherwise | $\left\lfloor \dfrac{N_{RB}^{DL}}{6} \right\rfloor$ | If =1, 1 bit provide the resource allocation within the narrowband Otherwise provide the allocated narrowband |

(continued)

| Resource block assignment in case bandwidth is 20MHz | | |
|---|---|---|
| Resource block assignment incase $N_{RB}^{DL} > 50$ | $\left\lceil \log_2 \left\lfloor \frac{N_{RB}^{DL}}{24} \right\rfloor \right\rceil + 5$ | $\log_2 \left\lfloor \frac{N_{RB}^{DL}}{24} \right\rfloor + 1$ MSB provide the wideband index 4 bits provide narrowband bitmap within the wideband |
| Resource block assignment otherwise | $\left\lfloor \frac{N_{RB}^{DL}}{6} \right\rfloor$ | If =1, 1 bit provide the resource allocation within the narrowband |
| | | Otherwise provide the allocated narrowband |
| **Resource block assignment otherwise** | | |
| Resource block assignment | $\left\lceil \log_2 \left\lfloor \frac{N_{RB}^{DL}}{6} \right\rfloor \right\rceil + 1$ | $\left\lceil \log_2 \left\lfloor \frac{N_{RB}^{DL}}{6} \right\rfloor \right\rceil$ MSB provide the narrowband index 1 bit provide the resource allocation within the narrowband. |
| Repetition number | 3 | The 3-bit field applies when ce-pdsch-puschEnhancement-config is configured by higher layers, otherwise the 2-bit field applies. |
| HARQ process number | 1 | |
| New data indicator | 1 | |
| HARQ-ACK resource offset | 0 or 2 | |
| Information for SC-MCCH change notification | 2 | |
| DCI subframe repetition number | 2 | |

**Table 3** - DCI type 6-1A specifics

| Field | #bits | Notes |
|---|---|---|
| Flag format 6-0A/6-1A | 1 | 0 indicates format 6-0A |
| Frequency hopping flag | 1 | 0 indicates frequency hopping is not enabled |
| Resource Block Assignment (RBA): $N_{RB}^{DL} > 25$ | $\left\lceil \log_2 \left\lfloor \frac{N_{RB}^{DL}}{6} \right\rfloor \right\rceil + 8$ | 3bits for narrowband, 5bits resource allocation using DL resource allocation type2, rest provide the narrowband index. |
| RBA: $6 < N_{RB}^{DL} \leq 25$ | $\left\lfloor \frac{N_{RB}^{DL}}{6} \right\rfloor + 5$ | $\left\lfloor \frac{N_{RB}^{DL}}{6} \right\rfloor$ provide the allocated narrowband, 5 bits resource allocation using DL resource allocation type2. |
| RBA: $N_{RB}^{DL} \leq 6$ | 5 | 5 bits resource allocation using DL resource allocation type2. |
| MCS | 4 | Modulation and coding scheme |
| Repetition Number | 2 | |
| HARQ Process Number | 3 (FDD), 4(TDD) | |
| New Data Indicator (NDI) | 1 | |
| Redundancy version (RV) | 2 | Can be relevant for Reps>4, |

(continued)

| Field | #bits | Notes |
|---|---|---|
| Transmitter Power Control | 2 | For PUCCH |
| Downlink Assignment Index | {} | |
| Antenna Ports and scrambling | 2 | |
| SRS request | 1 | Sounding Reference Signals. Reference signals transmitted in the LTE UL to enable the eNB to perform channel sounding. For PUCCH. |
| TPMI information for precoding | | |
| PMI confirmation for precoding | 1 | For TM6 |
| HARQ-ACK resource offset | 2 | |
| DCI subframe repetition number | 2 | Or Transport block in a bundle |
| HARQ ACK bundling flag | 1+2 | Once this is one, there is Transport block in a bundle. Relevant for cases with high SNR. 7.3 in 36.213. |
| HARQ ACK delay | 3 | |

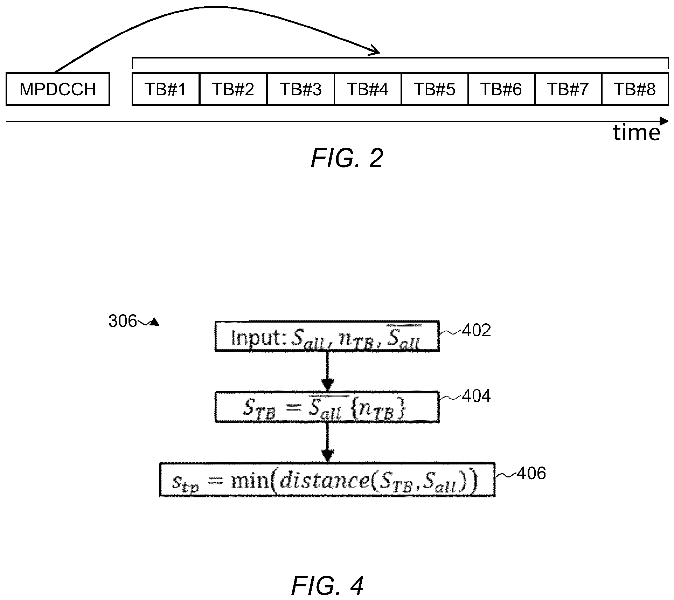

In eMTC, multiple uplink or downlink Transport Blocks (TBs) for both unicast and multicast transmissions may be scheduled. Figure 2 shows how scheduling may be carried out using the MTC Physical Downlink Control CHannel (MPDCCH). In Figure 2, multiple TBs are allocated with consecutive resources in time. However, the skilled person would understand that other ways of allocating resources are possible.

Scheduling may be carried out via a DCI without increasing the number of blind decodes. For Coverage Enhancement (CE) Mode A of LTE, the maximum number of scheduled transport blocks with one single DCI may be 8 in the UL, and 8 in the DL. For CE Mode B of LTE, the maximum number of scheduled transport blocks with one single DCI may be 4 in the UL, 4 in the DL. For both UL and DL unicast, at least consecutive resource allocation in time may be supported when multiple TBs are scheduled by one single DCI. This applies for valid subframes within the consecutive resource allocation in time. When scheduling of multiple TBs is enabled, the number of scheduled transport blocks ($\geq$ 1) may be dynamically selected via DCI.

For the DL unicast for a UE, when multiple TBs are scheduled by one DCI, the following parameter values may be the same across all the TBs: Frequency-hopping flag, PMI confirmation (TM6-specific), Precoding information (TM6-specific), DM-RS scrambling / antenna ports (TM9-specific), Downlink assignment index (TDD-specific), PUCCH power control. For the DL or UL unicast for a UE, when multiple TBs are scheduled by one DCI, the parameter values for MCS, Resource assignment, and/or Repetitions may be the same across all the TBs scheduled by that DCI.

In order to address limitations in prior Hybrid automatic repeat request (HARQ) processes, a set of rules may be applied within the HARQ system to define possible combinations of HARQ process sequences. These rules may be applicable for both Frequency Division Duplex (FDD) and Time Division Duplex (TDD) transmission, along with UL, DL, and interleaved UL/DL transmission. Each of the following rules may be applied in combination or individually as appropriate to provide functioning system.

HARQ process numbers may be limited to a defined order, for example always increasing or decreasing. This will not limit behaviour on the network side as the base station still has access to arbitrary numbers of process numbers, but it minimises the number of available combinations of HARQ process number sequences.

Retransmission may need to be done using a single-TB transmission. As it may not be possible to cover all per process transmission/retransmission combinations, it may be necessary to allow for a single retransmission. This can be implemented using a legacy 6-1/0A DCI or using a multi-TBs DCI set with number of TBs to transmit as 1, or any appropriate DCI message or signalling technique.

As many combinations as possible may be allowed based on "best effort" and with respect to the probability of each combination. Not all HARQ process, number of TBs, and retransmission combinations are possible given the limited number of bits available. For example, a best effort approach may be giving higher score to these combinations when constructing larger combinations of HARQ process numbers. There may be some source coding when building the combination using the base station's (for example eNB's) scheduler information. For example, if a combination of process 2 followed by process 3 is not available in case of 2 TBs transmission, then it is preferable to allow this combination in another case. In such a scenario, in a 3 TBs transmission this combination of HARQ process 2 followed by process 3 will be included as part of the available combinations. Another example is if the probability of retransmission for each HARQ process is 10%, therefore there will be less of an emphasis on NDI='0', as retransmission are much less likely to occur. However, if a combination is prevalent enough, it may be necessary to still allow for a sequence with a retransmission.

As many unique retransmissions as possible may be allowed. A unique retransmission is a combination of HARQ process numbers adjoined by their NDI fields that have not occurred in previous combinations. This may allow for new HARQ process transmission sequences while allowing for these sequences to also retransmit.

The number of retransmissions with 2 or more TBs in sequence may be maximised, in contrast to an interleaved transmission and retransmission scheme. The wireless channels may be slow to change, and if there is an interference it will most likely affect several TBs in sequence, hence increased the probability of needing to retransmit more than one TB This effect may be stronger in CE Mode A where there are fewer repetitions per transmission.

The maximum process number per number of TBs may be limited. For example, in a transmission of 4 TBs, HARQ process number 6 may be the maximum. This may reduce the number of possibilities for the HARQ process sequence set. However, this reduction comes at a cost of flexibility for the network, as it may not possible to transmit in higher HARQ processes.

In DCIs there are 3 bits allocated for the HARQ process number, along with 1 bit for a new data indicator (NDI). The NDI is used as a flag to notify if the DL transmission allocation or UL transmission grant is for a retransmission or a transmission of new information. Transmitting multiple TBs may be carried out by transmitting the first HARQ process ID along with the number of TBs. However, this results in very limited options for retransmission (if any) and transmission of consecutive HARQ processes numbers only. For example, a transmission of HARQ process number of 1 followed by 4 would not be possible using this method. Another HARQ process scheme may be to use a bitmap for the transmission. This allows for high complexity in the transmission and allows for out-of-order transmission of HARQ processes. However, this method is resource expensive, as it requires high number of bits for the DCI transmission (at least 8-bit).

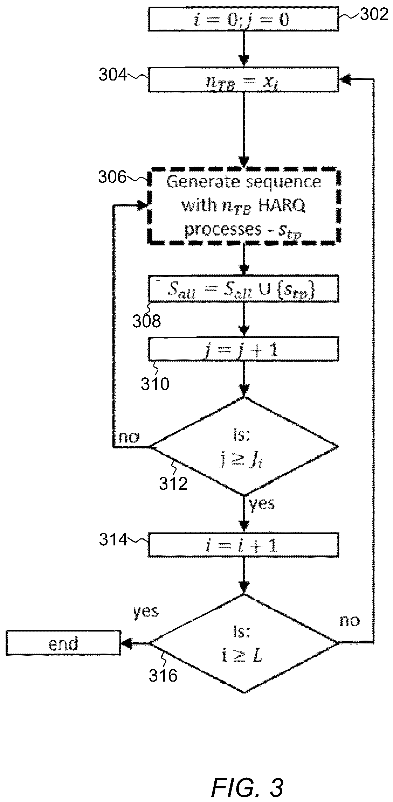

Figure 3 shows a method of building a HARQ process set for transmission. In Figure 3, $S_{all}$ represents the group of all the HARQ process sequences, J is a vector with the same number of elements as the number of different numbers of TBs available to transmit. For example, to transmit 1-8 TBs with one DCI, the size of vector J is 8. Each element in this vector represents the number of different HARQ process sequences that are available for the relevant number of TBs. That is, $J_8 = 1$ will specify only 1 HARQ process sequence available for 8 TB transmission, implying there will not be any retransmissions in this scenario. The vector $X = [x_0, x_1 ... ]$ is also the same size as J and each element represents the number of TBs to be transmitted ($n_{TB}$). L is specified as the total number of combinations available using the allocated number of bits. For example, for 4 bits allocated for the sequence pool numbering, L would be $2^4=16$.

At step 302, indices i and j are initialized as zero. At step 304, the number of TBs to be transmitted is determined. At step 306, a sequence of HARQ process to be transmitted is generated (for example, using the method discussed with reference to Figure 4). At step 308, the new sequence of HARQ processes is added to the HARQ process set $S_{all}$. At step 310, index j is incremented by one. At step 312, if j < $J_i$, then the process returns to step 306. At step 312, if j $\geq$ $J_i$ then the process continues to step 314. At step 314, index i is incremented by one. At step 316, if i < L, then the process returns to step 304. At step 316, if i $\geq$ L, then for each possible number of TBs to be transmitted, the iterations have been completed $J_i$ times, and the process ends.

Figure 4 shows an example method for implementing step 306 of Figure 3. At step 402, $S_{all}$, $\overline{S_{all}}$, and $n_{TB}$ are received. $\overline{S_{all}}$ is defined as all possible combinations of HARQ process sequences taking into consideration, for example, the rules and factors discussed above, along with $S_{all} \cap \overline{S_{all}} = \varnothing$. At step 404 a new sequence set is created. The sequence set includes all the possible combinations from $\overline{S_{all}}$ for $n_{TB}$ TBs for transmission. At step 406 $s_{tp}$ is defined as the sequence in set $S_{TP}$ containing the least distance from set $S_{all}$.

An example application of the methods of Figures 3 and 4 is discussed with reference to Tables 4, 5 and 6. Referring to Table 4, using 4 bits covers all use cases for 8 HARQ processes with retransmission for each one. However, in Table 5 only some of the use cases are considered, and transmission of HARQ sequence 4 followed by HARQ sequence 5 is not possible using the bit formula. This is of course an example and the skilled person would understand that it is possible to have several types of tables with different distance formulas. Referring to Table 6, some of the use cases missing in Table 5 are available in this use case. For example, the combination of HARQ process 4 followed by 5 is found with different NDI possibilities in the first five rows.

**Table 4 -** HARQ Process Set and NDI for $n_{TB}$ = 1

| $n_{TB}$=1 | | | | | |
|---|---|---|---|---|---|
| Bit formula | | | | P# | NDI |
| 0 | 0 | 0 | 0 | 0 | 0 |
| 0 | 0 | 0 | 1 | 0 | 1 |

(continued)

| n_TB=1 | | | | P# | NDI |
|---|---|---|---|---|---|
| Bit formula | | | | | |
| 0 | 0 | 1 | 0 | 1 | 0 |
| 0 | 0 | 1 | 1 | 1 | 1 |
| 0 | 1 | 0 | 0 | 2 | 0 |
| 0 | 1 | 0 | 1 | 2 | 1 |
| 0 | 1 | 1 | 0 | 3 | 0 |
| 0 | 1 | 1 | 1 | 3 | 1 |
| 1 | 0 | 0 | 0 | 4 | 0 |
| 1 | 0 | 0 | 1 | 4 | 1 |
| 1 | 0 | 1 | 0 | 5 | 0 |
| 1 | 0 | 1 | 1 | 5 | 1 |
| 1 | 1 | 0 | 0 | 6 | 0 |
| 1 | 1 | 0 | 1 | 6 | 1 |
| 1 | 1 | 1 | 0 | 7 | 0 |
| 1 | 1 | 1 | 1 | 7 | 1 |

**Table 5 -** HARQ Process Set and NDI for $n_{TB} = 2$

| n_TB=2 | | | | P# | | NDI | |
|---|---|---|---|---|---|---|---|
| Bit formula | | | | | | | |
| 0 | 0 | 0 | 0 | 0 | 1 | 0 | 0 |
| 0 | 0 | 0 | 1 | 0 | 1 | 1 | 0 |
| 0 | 0 | 1 | 0 | 0 | 1 | 0 | 1 |
| 0 | 0 | 1 | 1 | 0 | 1 | 1 | 1 |
| 0 | 1 | 0 | 0 | 1 | 3 | 0 | 0 |
| 0 | 1 | 0 | 1 | 1 | 3 | 1 | 0 |
| 0 | 1 | 1 | 0 | 1 | 3 | 0 | 1 |
| 0 | 1 | 1 | 1 | 1 | 3 | 1 | 1 |
| 1 | 0 | 0 | 0 | 1 | 5 | 1 | 1 |
| 1 | 0 | 0 | 1 | 1 | 7 | 1 | 1 |
| 1 | 0 | 1 | 0 | 3 | 5 | 1 | 1 |
| 1 | 0 | 1 | 1 | 3 | 7 | 1 | 1 |
| 1 | 1 | 0 | 0 | 5 | 7 | 0 | 0 |
| 1 | 1 | 0 | 1 | 5 | 7 | 1 | 0 |
| 1 | 1 | 1 | 0 | 5 | 7 | 0 | 1 |
| 1 | 1 | 1 | 1 | 5 | 7 | 1 | 1 |

**Table 6 -** HARQ Process Set and NDI for $n_{TB}$ = 3

| $n_{TB}$=3 | | | | | | | | | |
|---|---|---|---|---|---|---|---|---|---|
| Bit formula | | | | P# | | | NDI | | |
| 0 | 0 | 0 | 0 | 2 | 4 | 5 | 0 | 0 | 0 |
| 0 | 0 | 0 | 1 | 2 | 4 | 5 | 0 | 1 | 1 |
| 0 | 0 | 1 | 0 | 2 | 4 | 5 | 1 | 1 | 0 |
| 0 | 0 | 1 | 1 | 2 | 4 | 5 | 0 | 1 | 0 |
| 0 | 1 | 0 | 0 | 2 | 4 | 5 | 1 | 0 | 0 |
| 0 | 1 | 0 | 1 | 3 | 4 | 7 | 1 | 1 | 1 |
| 0 | 1 | 1 | 0 | 3 | 6 | 7 | 1 | 1 | 1 |
| 0 | 1 | 1 | 1 | 4 | 6 | 7 | 1 | 1 | 1 |
| 1 | 0 | 0 | 0 | 1 | 2 | 3 | 1 | 1 | 1 |
| 1 | 0 | 0 | 1 | 1 | 2 | 3 | 0 | 0 | 0 |
| 1 | 0 | 1 | 0 | 2 | 3 | 7 | 1 | 1 | 1 |
| 1 | 0 | 1 | 1 | 4 | 5 | 6 | 1 | 1 | 1 |
| 1 | 1 | 0 | 0 | 2 | 6 | 7 | 0 | 0 | 0 |
| 1 | 1 | 0 | 1 | 2 | 6 | 7 | 0 | 1 | 1 |
| 1 | 1 | 1 | 0 | 2 | 6 | 7 | 1 | 1 | 0 |
| 1 | 1 | 1 | 1 | 2 | 5 | 6 | 1 | 1 | 1 |

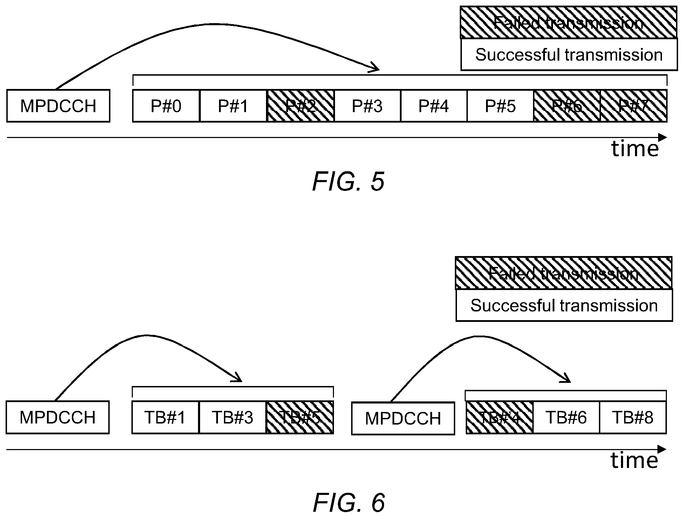

Figure 5 shows an example of transmitting 8 TBs. Transmission has failed in HARQ process numbers 2, 6 and 7. Using previous methods significant resources would be required to generate a DCI to retransmit the failed TBs (for example, a bitmap of 16 bits). Only the lowest HARQ process number and the number of processes could be transmitted, but would require transmission of 2 DCIs. Applying the method of Figures 3 and 4 to the failures in Figure 5, only DCI with $n_{TB}$ = 3 with the bit formula '1100' need be transmitted as seen in Table 6. The DCI size is thus significantly reduced compared to a bitmap, and only one DCI is required.

In another example, 5 bits may be allocated for HARQ process management. This allows for a maximum of $2^5$ = 32 HARQ process sequences. In this example the bits are shared between all $n_{TB}$ possibilities. As can be inferred from Tables 7A and 7B, it is only possible to transmit a maximum of 4 TBs continuously. Considering there are 1960 possible HARQ processes with NDI possibilities, the number of HARQ process combinations with NDI flag for each process may be defined by Equation 1.

$$possibilities = \sum_{i=0}^{N_{TB}} \left( 2^{x_i} \cdot \frac{8!}{(8-x_i)! \cdot x_i!} \right) \qquad \text{Equation 1}$$

In this example, $J$ = [16 9 5 2] with a maximum of 8 HARQ process numbers. This allows for high flexibility for the 1 process transmission. Therefore, retransmission is always possible if required due.

In this example, there are no possible HARQ combinations of processes #2, #3, and #4 together. This may be because the scheduler has decided it is less likely to happen, and as it is always possible to use single DCI per transmission for this use case. If retransmissions are less likely, some or all of this combination may be added to the tables.

The sequence distance formula of step 406 from Figure 4 takes several behaviours into consideration. The first behaviour is the HARQ process number. In case there are two or more HARQ processes in sequence and they are enclosed by the new longer sequence, the distance for the new sequence is highly increased. The second behaviour is to make sure it is possible to retransmit for all HARQ processes. The third behaviour is the transmission probability of different HARQ processes. In this case, HARQ process 4 and 5 had high transmission probability, therefore there was an allocation for both new transmission and retransmission.

**Table 7A -** Bit Allocation for each HARQ Process Sequence

| Bit formula | | | | | P # | | | | NDI | | | |
|---|---|---|---|---|---|---|---|---|---|---|---|---|
| 0 | 0 | 0 | 0 | 0 | 1 | - | - | - | 0 | - | - | - |
| 0 | 0 | 0 | 0 | 0 | 2 | - | - | - | 0 | - | - | - |
| 0 | 0 | 0 | 0 | 1 | 3 | - | - | - | 0 | - | - | - |
| 0 | 0 | 0 | 0 | 1 | 4 | - | - | - | 0 | - | - | - |
| 0 | 0 | 0 | 1 | 0 | 5 | - | - | - | 0 | - | - | - |
| 0 | 0 | 0 | 1 | 0 | 6 | - | - | - | 0 | - | - | - |
| 0 | 0 | 0 | 1 | 1 | 7 | - | - | - | 0 | - | - | - |
| 0 | 0 | 0 | 1 | 1 | 8 | - | - | - | 0 | - | - | - |
| 0 | 0 | 1 | 0 | 0 | 1 | - | - | - | 1 | - | - | - |
| 0 | 0 | 1 | 0 | 0 | 2 | - | - | - | 1 | - | - | - |
| 0 | 0 | 1 | 0 | 1 | 3 | - | - | - | 1 | - | - | - |
| 0 | 0 | 1 | 0 | 1 | 4 | - | - | - | 1 | - | - | - |
| 0 | 0 | 1 | 1 | 0 | 5 | - | - | - | 1 | - | - | - |
| 0 | 0 | 1 | 1 | 0 | 6 | - | - | - | 1 | - | - | - |
| 0 | 0 | 1 | 1 | 1 | 7 | - | - | - | 1 | - | - | - |
| 0 | 0 | 1 | 1 | 1 | 8 | - | - | - | 1 | - | - | - |

**Table 7B** - Bit Allocation for each HARQ Process Sequence

| Bit formula | | | | | P# | | | | NDI | | | |
|---|---|---|---|---|---|---|---|---|---|---|---|---|
| 0 | 1 | 0 | 0 | 0 | 1 | 2 | - | - | 1 | 1 | - | - |
| 0 | 1 | 0 | 0 | 0 | 2 | 3 | - | - | 1 | 1 | - | - |
| 0 | 1 | 0 | 0 | 1 | 3 | 4 | - | - | 1 | 1 | - | - |
| 0 | 1 | 0 | 0 | 1 | 4 | 5 | - | - | 1 | 1 | - | - |
| 0 | 1 | 0 | 1 | 0 | 5 | 6 | - | - | 1 | 1 | - | - |
| 0 | 1 | 0 | 1 | 0 | 6 | 7 | - | - | 1 | 1 | - | - |
| 0 | 1 | 0 | 1 | 1 | 7 | 8 | - | - | 1 | 1 | - | - |
| 0 | 1 | 0 | 1 | 1 | 1 | 2 | - | - | 0 | 0 | - | - |
| 0 | 1 | 1 | 0 | 0 | 4 | 5 | - | - | 0 | 0 | - | - |
| 0 | 1 | 1 | 0 | 0 | 1 | 3 | 5 | - | 1 | 1 | 1 | - |
| 0 | 1 | 1 | 0 | 1 | 4 | 6 | 8 | - | 1 | 1 | 1 | - |
| 0 | 1 | 1 | 0 | 1 | 1 | 4 | 6 | - | 0 | 0 | 0 | - |
| 0 | 1 | 1 | 1 | 0 | 3 | 5 | 7 | - | 1 | 1 | 1 | - |
| 0 | 1 | 1 | 1 | 0 | 4 | 6 | 8 | - | 0 | 0 | 0 | - |
| 0 | 1 | 1 | 1 | 1 | 1 | 3 | 6 | 8 | 0 | 0 | 0 | 0 |
| 0 | 1 | 1 | 1 | 1 | 1 | 3 | 6 | 8 | 1 | 1 | 1 | 1 |

Referring to Figure 6, an example of two transmissions of three TBs are executed. Out of these six TBs, two have transmission failure, TB#4 and TB#5. Using another DCI for two TB transmission with HARQ process bit formula of [01100] it is possible to retransmit both TBs, thus conserve overhead of transmission. In case it is not possible to retransmit using a hard-coded transmission, it is possible to still use the 1-HARQ process NDI.

The processes and systems described above thus provide mechanisms for retransmission of TBs from a multiple-TB transmission while minimising the control signalling overhead compared to previous methods. In particular the available HARQ process number sequences that are available may be constrained and each available sequence allocated to a bit value. That bit value may be utilised in a DCI message to request retransmission such that the bit value indicates the HARQ process numbers that are to be retransmitted.

Although not shown in detail any of the devices or apparatus that form part of the network may include at least a processor, a storage unit and a communications interface, wherein the processor unit, storage unit, and communications interface are configured to perform the method of any aspect of the present invention. Further options and choices are described below.

The signal processing functionality of the embodiments of the invention especially the gNB and the UE may be achieved using computing systems or architectures known to those who are skilled in the relevant art. Computing systems such as, a desktop, laptop or notebook computer, hand-held computing device (PDA, cell phone, palmtop, etc.), mainframe, server, client, or any other type of special or general purpose computing device as may be desirable or appropriate for a given application or environment can be used. The computing system can include one or more processors which can be implemented using a general or special-purpose processing engine such as, for example, a microprocessor, microcontroller or other control module.

The computing system can also include a main memory, such as random access memory (RAM) or other dynamic memory, for storing information and instructions to be executed by a processor. Such a main memory also may be used for storing temporary variables or other intermediate information during execution of instructions to be executed by the processor. The computing system may likewise include a read only memory (ROM) or other static storage device for storing static information and instructions for a processor.

The computing system may also include an information storage system which may include, for example, a media drive and a removable storage interface. The media drive may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media may include, for example, a hard disk, floppy disk, magnetic tape, optical disk, CD or DVD, or other fixed or removable medium that is read by and written to by media drive. The storage media may include a computer-readable storage medium having particular computer software or data stored therein.

In alternative embodiments, an information storage system may include other similar components for allowing computer programs or other instructions or data to be loaded into the computing system. Such components may include, for example, a removable storage unit and an interface , such as a program cartridge and cartridge interface, a removable memory (for example, a flash memory or other removable memory module) and memory slot, and other removable storage units and interfaces that allow software and data to be transferred from the removable storage unit to computing system.

The computing system can also include a communications interface. Such a communications interface can be used to allow software and data to be transferred between a computing system and external devices. Examples of communications interfaces can include a modem, a network interface (such as an Ethernet or other NIC card), a communications port (such as for example, a universal serial bus (USB) port), a PCMCIA slot and card, etc. Software and data transferred via a communications interface are in the form of signals which can be electronic, electromagnetic, and optical or other signals capable of being received by a communications interface medium.

In this document, the terms 'computer program product', 'computer-readable medium' and the like may be used generally to refer to tangible media such as, for example, a memory, storage device, or storage unit. These and other forms of computer-readable media may store one or more instructions for use by the processor comprising the computer system to cause the processor to perform specified operations. Such instructions, generally 45 referred to as 'computer program code' (which may be grouped in the form of computer programs or other groupings), when executed, enable the computing system to perform functions of embodiments of the present invention. Note that the code may directly cause a processor to perform specified operations, be compiled to do so, and/or be combined with other software, hardware, and/or firmware elements (e.g., libraries for performing standard functions) to do so.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory. In an embodiment where the elements are implemented using software, the software may be stored in a computer-readable medium and loaded into computing system using, for example, removable storage drive. A control module (in this example, software instructions or executable computer program code), when executed by the processor in the computer system, causes a processor to perform the functions of the invention as described herein.

Furthermore, the inventive concept can be applied to any circuit for performing signal processing functionality within a network element. It is further envisaged that, for example, a semiconductor manufacturer may employ the inventive concept in a design of a stand-alone device, such as a microcontroller of a digital signal processor (DSP), or application-specific integrated circuit (ASIC) and/or any other sub-system element.

It will be appreciated that, for clarity purposes, the above description has described embodiments of the invention with reference to a single processing logic. However, the inventive concept may equally be implemented by way of a plurality of different functional units and processors to provide the signal processing functionality. Thus, references to specific functional units are only to be seen as references to suitable means for providing the described functionality, rather than indicative of a strict logical or physical structure or organisation.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices.

Thus, the elements and components of an embodiment of the invention may be physically, functionally and logically implemented in any suitable way. Indeed, the functionality may be implemented in a single unit, in a plurality of units or as part of other functional units. Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' or "including" does not exclude the presence of other elements.

**Claims**

1. A method of building a set of Hybrid Automatic Repeat reQuest (HARQ) process IDs for use in the transmission of TBs in a cellular wireless communication system when scheduling of multiple TBs is enabled, the method comprising the steps of

   for each number of TBs that may be scheduled by a DCI, defining at least one sequence of HARQ Process IDs, where each sequence of HARQ Process IDs is mapped to a bit sequence, wherein the HARQ Process IDs within each sequence increase;
   transmitting a DCI message from a base station to a UE to schedule transmission of at least one TB, wherein the DCI message includes one of the bit sequences corresponding to a sequence of HARQ Process IDs defined for the number of TBs being transmitted; and
   transmitting the number of TBs scheduled in the DCI using the sequence of HARQ Process IDs indicated by the transmitted bit sequence,
   wherein the size of the bit sequence is equal or greater than the number of scheduled TBs.

2. A method according to claim 1, wherein the number of TBs that may be scheduled is restricted.

Core Network

S1

S1

RAN

S1

X2

X2

X2

FIG. 1

| MPDCCH | | TB#1 | TB#2 | TB#3 | TB#4 | TB#5 | TB#6 | TB#7 | TB#8 |

time

*FIG. 2*

306

Input: $S_{all}, n_{TB}, \overline{S_{all}}$ ~402

$S_{TB} = \overline{S_{all}}\{n_{TB}\}$ ~404

$s_{tp} = \min\left(distance(S_{TB}, S_{all})\right)$ ~406

*FIG. 4*

FIG. 3

| | Failed transmission |
| --- | --- |
| | Successful transmission |

| MPDCCH | | P#0 | P#1 | P#2 | P#3 | P#4 | P#5 | P#6 | P#7 |

time

## FIG. 5

| | Failed transmission |
| --- | --- |
| | Successful transmission |

| MPDCCH | | TB#1 | TB#3 | TB#5 | | MPDCCH | | TB#4 | TB#6 | TB#8 |

time

## FIG. 6

Europäisches
Patentamt

European
Patent Office

Office européen
des brevets

**EUROPEAN SEARCH REPORT**

Application Number

EP 20 16 4357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/264708 A1 (LI XINCAI [CN] ET AL) 17 September 2015 (2015-09-17) * paragraph [0134] - paragraph [0137] * * paragraph [0141] * * paragraph [0156] - paragraph [0158] * * paragraph [0168] * * paragraph [0192] * * paragraph [0205] - paragraph [0216] * * paragraph [0218] * ----- | 1,2 | INV. H04L1/18 |
| X | SAMSUNG: "Scheduling of multiple transport blocks for MTC", 3GPP DRAFT; R1-1810822, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20181008 - 20181012 29 September 2018 (2018-09-29), XP051518227, Retrieved from the Internet: URL:http://www.3gpp.org/ftp/tsg%5Fran/WG1% 5FRL1/TSGR1%5F94b/Docs/R1%2D1810822%2Ezip [retrieved on 2018-09-29] * section 3 * * section 5 * ----- | 1,2 | TECHNICAL FIELDS SEARCHED (IPC) H04L |

The present search report has been drawn up for all claims

| Place of search | Date of completion of the search | Examiner |
|---|---|---|
| The Hague | 17 July 2020 | García Larrodé, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 4357

17-07-2020

| Patent document cited in search report | Publication date | Patent family member(s) | | Publication date |
|---|---|---|---|---|
| US 2015264708 A1 | 17-09-2015 | CN | 103796327 A | 14-05-2014 |
| | | EP | 2914043 A2 | 02-09-2015 |
| | | US | 2015264708 A1 | 17-09-2015 |
| | | WO | 2013167090 A2 | 14-11-2013 |

EPO FORM P0459

For more details about this annex : see Official Journal of the European Patent Office, No. 12/82